# EUROPÄISCHE PATENTSCHRIFT

(11) **EP 1 607 281 B1**
(45) Veröffentlichungstag und Bekanntmachung des Hinweises auf die Patenterteilung: **13.06.2007**
(21) Anmeldenummer: 05020225.8
(22) Anmeldetag: 05.07.2002
(51) Int. Cl.: B60R 21/20

(54) **Beifahrer-Airbag-Modul**
Passenger-side airbag module
Module de coussin gonflable côté passager

(30) Priorität: 06.07.2001 DE 10132931
(43) Veröffentlichungstag der Anmeldung: 21.12.2005
(62) Teilanmeldung aus: 02015036.3
(73) Patentinhaber: ADAM OPEL AG, 65423 Rüsselsheim (DE)
(72) Erfinder: Rick, Ulrich, 55595 Roxheim (DE)

(56) Entgegenhaltungen:
- DE-A- 19 909 426
- DE-A- 19 957 578
- DE-C1- 19 737 067

## Beschreibung

Die Erfindung bezieht sich auf ein Beifahrer-Airbag-Modul für ein Kraftfahrzeug mit einem einteiligen Gehäuse für einen aufblasbaren Gassack, einem Diffusor und einem Gasgenerator zur Erzeugung von Druckgas, wobei das Gehäuse eine mit dem Diffusor verbundene Gasgeneratorkammer und eine Gassackkammer aufweist.

Die DE 197 03 767 A1 offenbart ein Gehäuse für einen aufblasbaren Gassack in einem Kraftfahrzeug mit daran angeformten Befestigungshalterungen, einem Diffusor und einem in den Diffusor eingesetzten Gasgenerator. Das einteilige Gehäuse weist zwei Kammern auf, von denen die eine eine Diffusorkammer mit strömungsoptimierten Gasdurchlassöffnungen aufweisenden Kammerwandungen ist, wobei an der Diffusorkammerwandung Verstärkungsrippen des Gehäuses angeformt sind und die andere eine Gassackkammer ist.

Im Weiteren ist aus der DE 44 42 202 A1 ein Beifahrer-Airbag-Modul mit einem Gehäuse für einen aufblasbaren Gassack in einem Kraftfahrzeug bekannt. Das Gehäuse umschließt ein Innengehäuse, das gasdicht mit einem den Gassack halternden Diffusor verbunden ist, der sich bis annähernd an eine Abdeckkappe des Gehäuses erstreckt. Das Beifahrer-Airbag-Modul ist aus einer Vielzahl von Einzelteilen aufgebaut und somit sehr aufwendig zu fertigen und zu montieren.

Darüber hinaus offenbart die DE 197 07 997 A1 ein Airbag-Modul mit einer mit einem Diffusor verbundenen Gasgeneratorkammer und einer Gassackkammer. Zum gerichteten Einleiten des von dem Gasgenerator erzeugten Druckgases in den Gassack sind Gasführungen vorgesehen, die zueinander beabstandet und im Wesentlichen V-förmig zueinander angeordnet sind. Der Gassack ist im unbeaufschlagten Zustand mehrlagig über und zwischen den Gasführungen gefaltet.

Die DE 199 57 578 A offenbart ein Beifahrer-Airbag-Modul mit den Merkmalen des Oberbegriffs des Anspruchs 1.

Es ist Aufgabe der Erfindung, ein Beifahrer-Airbag-Modul der eingangs genannten Art zu schaffen, das bei einem kompakten Aufbau kostengünstig herstellbar ist und dabei eine verbesserte Sicherheitsfunktion, insbesondere auch bei einer Out-Off-Position des Fahrzeuginsassen gewährleistet.

Erfindungsgemäß wird die Aufgabe durch das Beifahrer-Airbag-Modul mit den Merkmalen des Patentanspruchs 1 gelöst.

Aufgrund der einteiligen Ausführung des Gehäuses mit dem Gasleitkanal ist das Beifahrer-Airbag-Modul unter einem geringen Montageaufwand kostengünstig zu fertigen und weist einen kompakten Aufbau auf. Der Gasleitkanal bewirkt eine hohe Ausströmgeschwindigkeit des Druckgases und leitet dasselbe in eine gewünschte Richtung, womit eine verbesserte Sicherheitsfunktion gewährleistet ist. Selbstverständlich ist es auch möglich, mehrere Gasleitkanäle auszubilden, die das Druckgas bei einer Airbagauslösung gezielt in den Gassack einleiten.

Um das aus dem Diffusor ausströmende Druckgas in eine zum schnellen Aufblasen des Gassacks erforderliche Richtung zu lenken, verläuft der kaminartige Gasleitkanal radial zur Gasgeneratorkammer.

Damit das Druckgas gezielt in den Gassack einströmt, weist der kaminartige Gasleitkanal mehrere parallel zueinander ausgerichtete Züge auf. Die einzelnen Züge können mit Zwischenstegen voneinander getrennt sein.

Zur weiteren Verbesserung der Sicherheitsfunktion des Beifahrer-Airbag-Moduls erstreckt sich vorzugsweise der Gasleitkanal bis in die Ebene einer Austrittsöffnung der Gassackkammer.

Um die Entfaltung des Gassacks bei seiner Beaufschlagung zu begünstigen, ist zweckmäßigerweise der Gassack an der freien Oberkante der Gassackkammer umlaufend abgedichtet befestigt. Die Befestigung kann beispielsweise durch Verschweißen oder Verkleben des Gassacks mit dem Gehäuse bzw. der Gassackkammer erfolgen.

Bevorzugt ist der Gassack mittels eines Montagerings befestigt, der in einer Ausnehmung der Gassackkammer eingeklipst ist. Als Ausnehmung kann die freie Oberkante der Gassackkammer doppelwandig ausgeführt werden. Das Einklipsen des den Gassack festlegenden Montagerings ist mit einem geringen Arbeitsaufwand zu bewerkstelligen.

Vorzugsweise überspannt der Gassack im unbeaufschlagten Zustand eine Ausströmöffnung des Gasleitkanals einlagig und ist um den Gasleitkanal umlaufend gefaltet. Die Anordnung des Gassacks mindert in der Kombination mit der hohen Ausströmgeschwindigkeit des Druckgases das Out-Off-Position-Risiko wesentlich. Der Gassack wird bei seiner Beaufschlagung zuerst in der Mitte aufgeblasen, wodurch die weitere Entfaltung und ein Aufreißen einer Abdeckung optimiert erfolgen.

Zweckmäßigerweise geht eine der Längswandungen des im Querschnitt im Wesentlichen rechteckförmig ausgebildeten Gasleitkanals tangential von der Außenwandung der Gasgeneratorkammer ab und die andere Längswandung ist annähernd in der Mitte der Gasgeneratorkammer angeordnet. Durch diese Anordnung der Längswandungen in der Gassackkammer steht auf der einen Seite des Gasleitkanals ein relativ großer Freiraum in der Gassackkammer zur Unterbringung des Gassacks zur Verfügung.

Zur Erhöhung der Strömungsgeschwindigkeit des aus dem mittleren Bereich des Gasleitkanals austretenden Druckgases verlaufen bevorzugt die beiden Längswandungen des Gasleitkanals konkav zueinander. Die derart gebildete Ausströmöffnung des Gasleitkanals begünstigt das Aufblasen des Gassacks in dessen Mitte.

Um die Strömungsquerschnitte der Züge anforderungsgerecht auszulegen, sind bevorzugt die Züge im Querschnitt kreisförmig oder achteckförmig ausgebildet. Erfindungsgemäß stehen die Züge in Strömungsverbindung. Die Strömungsverbindung kann durch entsprechend durchbrochene bzw. fehlende Zwischenstege zwischen den einzelnen Zügen erzielt werden.

Zur Gewährleistung einer innigen Durchmischung des Druckgases ist vorzugsweise die Gasgeneratorkammer im Einströmbereich des Gasleitkanals siebartig durchbrochen. Diese Durchbrechungen bewirken darüber hinaus eine Dämpfung und eine Kühlung des Gasstromes, womit eine relativ geringe thermische und dynamischen Belastung des Gassacks und damit auch eine geringe Belastung des Fahrzeuginsassen während der Entfaltung des Gassacks beim Aufblasen einhergehen. Selbstverständlich ist unter einer siebartigen Durchbrechung eine Vielzahl von Durchbrüchen zu verstehen, die beliebige Geometrien aufweisen können. Beispielsweise können die Durchbrechungen rund, mehreckig, oval, kreuzförmig, wabenartig, waffelartig, kastenförmig oder dergleichen ausgebildet sein.

Damit das Beifahrer-Airbag-Modul ein geringes Eigengewicht aufweist, ist vorteilhafterweise das Gehäuse aus Kunststoff gefertigt und weist zumindest im Bereich der Gassackkammer Verstärkungsrippen auf. Das Gehäuse kann im Spritzgussverfahren kostengünstig hergestellt werden und ist aufgrund der Verstärkungsrippen formstabil, wobei die Verstärkungsrippen waben-, waffel-, kastenartig, diagonal oder kreuzweise verlaufen. Neben den Verstärkungsrippen im Bereich der Gassackkammer können auch auf der Außenseite der Gasgeneratorkammer Verstärkungsrippen angeordnet werden. Im Weiteren ist der Kunststoff recyclingfähig und nahezu ohne Einbuße seiner Eigenschaften wieder verwendbar. Der Kunststoff ist korrosionsbeständig und beliebig einfärbbar, weshalb eine Nachbehandlung der Oberflächen des Gehäuses entfällt. Zur besseren Schweißbarkeit kann der Kunststoff schwarz eingefärbt sein. Im Weiteren ist es möglich den Kunststoff mit Füllstoffen zu versehen oder das Gehäuse aus einem Kunststoff zu fertigen, der komplett oder teilweise aus einem Regenerat oder Recyclat besteht.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im Folgenden anhand mehrerer Ausführungsbeispiele unter Bezugnahme auf die zugehörigen Zeichnungen näher erläutert. Es zeigen:
- Fig. 1: einen Querschnitt durch ein Beifahrer-Airbag-Modul,
- Fig. 2: eine perspektivische Darstellung eines Gehäuses des Beifahrer-Airbag-Moduls nach einer ersten alternativen Ausgestaltung,
- Fig. 3: einen Längsschnitt durch das Gehäuse nach einer zweiten alternativen Ausgestaltung.

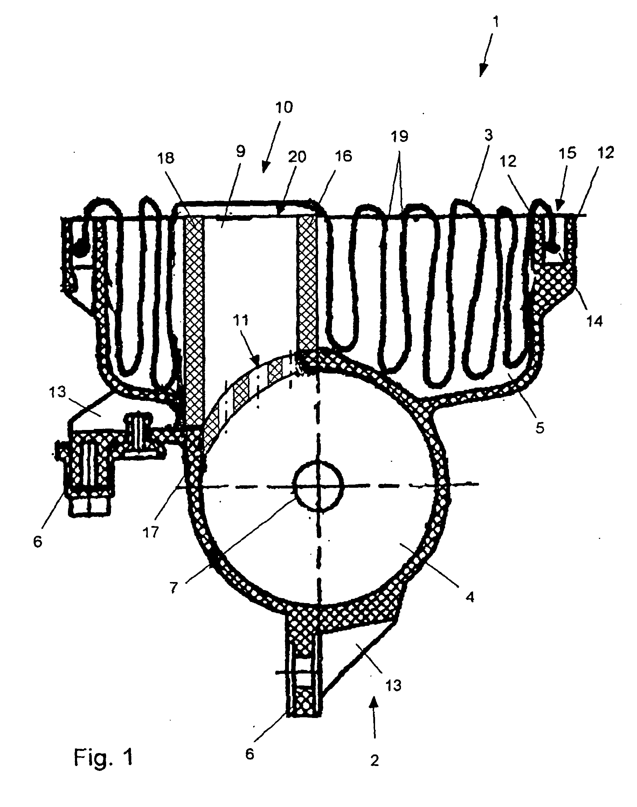

Ein Beifahrer-Airbag-Modul 1 umfasst nach Fig. 1 ein Gehäuse 2 für einen aufblasbaren Gassack 3. Das einstückige Gehäuse 2 weist eine Gasgeneratorkammer 4 zur Aufnahme eines Rohrgasgenerators und eine Gassackkammer 5 zur Aufnahme des im unbeaufschlagten Zustand gefalteten Gassacks 3 auf. Das Gehäuse 2 ist im Spritzgussverfahren aus Kunststoff gefertigt und mit angeformten Halterungen 6 versehen. Die Gasgeneratorkammer 4 weist auf der einen Stirnseite eine Befestigungsöffnung 7 zur Festlegung des Rohrgasgenerators und auf der gegenüberliegenden Stirnseite eine Einführöffnung 8 für denselben auf. An der Gasgeneratorkammer 4 ist der als Gasleitkanal 9 ausgebildete Diffusor 10 angeformt. Der Gasleitkanal 9 erstreckt sich kaminartig durch die Gassackkammer 5 bis in eine Ebene des freien Endes derselben und weist im Anbindungsbereich an die Gasgeneratorkammer 4 eine Einströmöffnung 11 für den Druckgasstrom bei ausgelöstem Airbag-Modul auf, die siebartig durchbrochen ist. Zur Festlegung des Gassacks 3 ist das freie Ende der Gassackkammer 5 doppelwandig ausgebildet. Zwischen die beiden Wandungen 12, die mittels Verstärkungsrippen 13 zueinander beabstandet sind, lässt sich ein den Gassack 3 halternder Montagering 14 in eine zwischen den Wandungen 12 ausgebildete Ausnehmung 15 einklipsen. Weiter Verstärkungsrippen 13 sind in den Anformungsbereichen der Halterungen 6 vorgesehen.

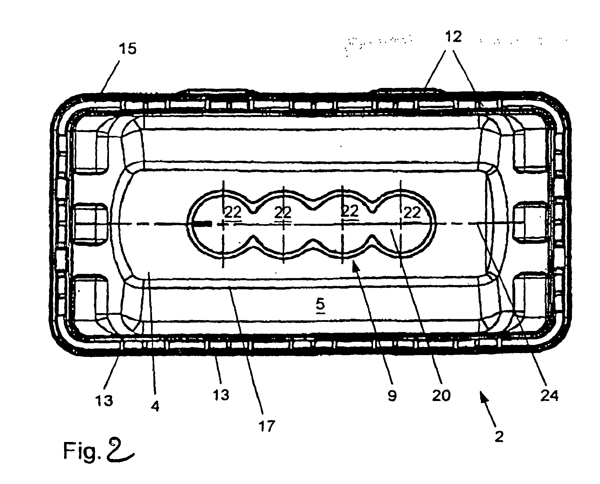

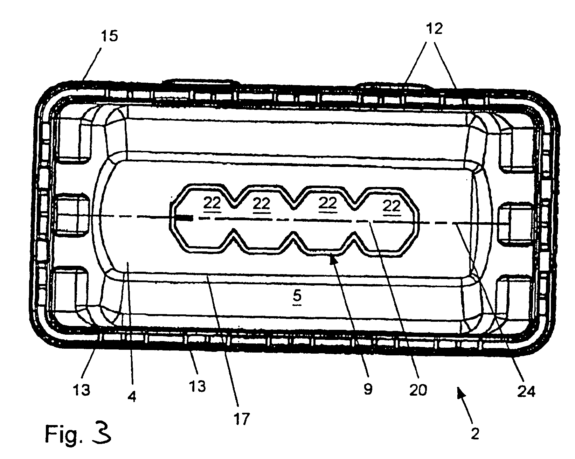

Gemäß Fig. 2 ist der in Längsrichtung zur Gasgeneratorkammer 4 orientierte, sich durch die Gassackkammer 5 erstreckende Gasleitkanal 9 in mehrere im Querschnitt kreisförmige Züge 22 unterteilt, die unter dem Weglassen von Zwischenstegen miteinander in Strömungsverbindung stehen. Die parallel zueinander verlaufenden Züge 22 des Gasleitkanals 9 nach Fig. 3 sind im Querschnitt achteckförmig ausgebildet und stehen ebenfalls in Strömungsverbindung. Die Züge 22 sind mittig zu der Längsachse 24 der Gasgeneratorkammer 5 und damit auch mittig zum Gehäuse 2 ausgerichtet.

### Bezugszeichenliste

- 1.: Beifahrer-Airbag-Modul
- 2.: Gehäuse
- 3.: Gassack
- 4.: Gasgeneratorkammer
- 5.: Gassackkammer
- 6.: Halterung
- 7.: Befestigungsöffnung
- 8.: Einführöffnung
- 9.: Gasleitkanal
- 10.: Diffusor
- 11.: Einströmöffnung
- 12.: Wandung
- 13.: Verstärkungsrippe
- 14.: Montagering
- 15.: Ausnehmung
- 16.: Längswandung
- 17.: Außenwandung
- 18.: Längswandung
- 19.: Falten
- 20.: Ausströmöffnung
- 21.: Zwischensteg
- 22.: Züge
- 23.: Eckpunkt
- 24.: Längsachse

## Patentansprüche

1. Beifahrer-Airbag-Modul eines Kraftfahrzeuges mit einem einteiligen Gehäuse (2) für einen aufblasbaren Gassack (3), einem Diffusor (10) und einem Gasgenerator zur Erzeugung von Druckgas, wobei das Gehäuse (2) eine mit dem Diffusor (10) verbundene Gasgeneratorkammer (4) und eine Gassackkammer (5) aufweist, wobei der als mindestens ein Gasleitkanal (9) ausgebildete Diffusor (10) einstückig mit dem Gehäuse (2) verbunden ist und sich ausgehend von der Gasgeneratorkammer (4) kaminartig in die Gassackkammer (5) erstreckt , **dadurch gekennzeichnet, dass** der kaminartige Gasleitkanal (9) radial zur Gasgeneratorkammer (4) verläuft, und dass der kaminartige Gasleitkanal (9) mehrere parallel zueinander ausgerichtete Züge (22) aufweist, welche miteinander in Strömungsverbindung stehen.

2. Beifahrer-Airbag-Modul nach Anspruch 1, **dadurch gekennzeichnet, dass** die einzelnen Züge (22) mit durchbrochenen Zwischenstegen voneinander getrennt sind.

## Claims

1. Passenger-side airbag module of a motor vehicle comprising a one-part housing (2) for an inflatable gasbag (3), a diffuser (10) and a gas generator for producing compressed gas, wherein the housing (2) has a gas generator chamber (4) which is connected to the diffuser (10), and a gasbag chamber (5), wherein the diffuser (10) configured as at least one gas guiding channel (9) is integrally connected to the housing (2) and extends in the manner of a chimney proceeding from the gas generator chamber (4) into the gasbag chamber (5), **characterised in that** the chimney-like gas guiding channel (9) extends radially to the gas generator chamber (4), and **in that** the chimney-like gas guiding channel (9) has a plurality of flues (22) aligned parallel to one another, which are in flow connection with one another.

2. Passenger-side airbag module according to claim 1, **characterised in that** the individual flues (22) are separated from one another by perforated intermediate webs.

## Revendications

1. Module de coussin gonflable de protection pour passager dans un véhicule automobile, comportant un boîtier (2) d'une seule pièce pour un coussin (3) gonflable, un diffuseur (10) et un générateur de gaz destiné à générer le gaz sous pression, le boîtier (2) comportant un compartiment pour le générateur de gaz (4) relié au diffuseur (10) et un compartiment pour le coussin gonflable (5), le diffuseur (10), réalisé sous la forme d'au moins un conduit de guidage du gaz (9), étant relié d'un seul tenant au boîtier (2) et s'étendant sous forme de cheminée depuis le compartiment pour le générateur de gaz (4) dans le compartiment pour le coussin gonflable (5), **caractérisé en ce que** le conduit de guidage du gaz (9) en forme de cheminée est orienté dans le sens radial par rapport au compartiment pour le générateur de gaz (4), et **en ce que** le conduit de guidage du gaz (9) en forme de cheminée comporte plusieurs registres (22) orientés parallèlement les uns aux autres et reliés entre eux par une liaison fluidique.

2. Module de coussin gonflable de protection pour passager selon la revendication 1, **caractérisé en ce que** les différents registres (22) sont séparés les uns des autres par des traverses intermédiaires perforées.
